Europäisches Patentamt

European Patent Office

Office européen des brevets

(19)

(11) Publication number: **0 086 844**
**B1**

(12) **EUROPEAN PATENT SPECIFICATION**

(45) Date of publication of patent specification: **19.11.87**

(51) Int. Cl.⁴: **H 02 K 9/04,** H 02 K 19/22

(21) Application number: **82902545.1**

(22) Date of filing: **26.08.82**

(86) International application number:
**PCT/JP82/00340**

(87) International publication number:
**WO 83/00955 17.03.83 Gazette 83/07**

(54) **GENERATOR FOR VEHICLE.**

(30) Priority: **28.08.81 JP 136470/81**
**31.08.81 JP 137335/81**
**31.08.81 JP 137336/81**

(43) Date of publication of application:
**31.08.83 Bulletin 83/35**

(45) Publication of the grant of the patent:
**19.11.87 Bulletin 87/47**

(84) Designated Contracting States:
**DE FR GB**

(56) References cited:
**DE-A-2 026 836**
**DE-A-2 442 640**
**DE-B-1 134 453**
**DE-C- 292 873**
**DE-C- 310 778**
**DE-C- 573 878**
**FR-A- 380 454**
**FR-A-1 488 929**
**JP-A-50 155 915**
**JP-A-53 012 006**
**JP-A-55 056 445**
**US-A-1 567 704**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **IWAKI, Yoshiyuki Mitsubishi Denki K.K.**
**Himeji Seisakusho 840 Chiyodacho Himeji-shi Hyogo 670 (JP)**
Inventor: **MATSUMOTO, Akio Mitsubishi Denki K. K.**
**Himeji Seisakusho**
**840 Chiyodacho Himeji-shi Hyogo 670 (JP)**

(74) Representative: **Lawson, David Glynne et al**
**MARKS & CLERK 57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to an air-cooled electric generator for a vehicle.

Electric generators for vehicles have the rotor thereof driven in general by an engine and a cooling fan for the electric generator is fixed to this rotor. The airflow from the cooling fan increases in proportion to the rotation speed, and the electric generator cannot be made small because a sufficient airflow cannot be obtained at low engine speeds (and therefore at a low rate of rotation of the electric generator). Upon raising the speed ratio of the electric generator to the engine, the airflow can be increased at low engine speeds but the noise of the cooling fan becomes too large to be practical at high engine speeds.

As a method of reducing noise of a cooling fan at high speed, there are proposed electromagnetic couplings in Japanese laid-open utility model application No. 109,104/1975 and Japanese laid-open utility model application No. 109,803/1975, but the airflow has been unable to increase in the low speed region because the rotary magnetic field is imparted by the rotor of the electric generator.

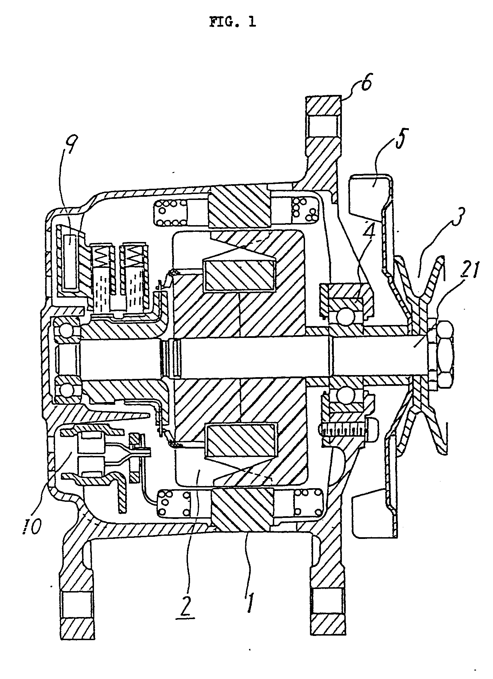

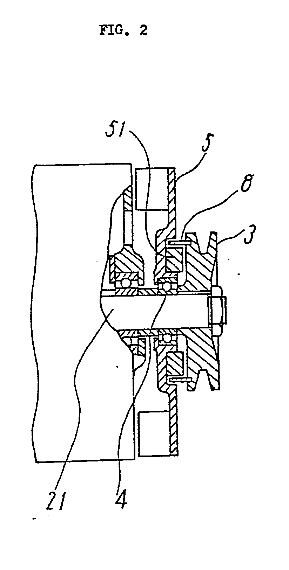

A conventional device of the type referred to will be described with respect to Figs. 1 and 2. Fig. 1 shows a stator having a three-phase armature winding wound thereon, and (2) is a rotor having a field winding wound thereon which opposes to said stator (1) through a minute gap in a diametric direction, (21) is a rotary shaft fixed to this rotor, (3) a pulley fixed to this rotary shaft, (5) a cooling fan fixed to said rotary shaft (21) to be integral with this pulley, (6) a bracket for journalling said rotary shaft (21) through a bearing (4), (9) a voltage regulator for holding the output voltage from said armature winding constant and (10) is a rectifier for rectifying an AC output induced on said armature winding.

As is well known, the conventional device constructed in this way is such that, upon starting the engine, the rotary shaft (21) is rotation-driven to rotate the rotor (2). Thus a three-phase AC voltage is induced on the armature winding and that AC voltage is rectified through the rectifier (10) and supplied to a battery or a load not shown. Also the output voltage from said armature winding is held at a constant magnitude by means of the voltage regulator.

Also since the cooling fan (5) is rotated integrally with the rotor (2), a cooling airflow is caused to pass through the electric generator to cool the electric generator.

However, said conventional cooling fan (5) has been disadvantageous in that an airflow is small in the low speed region of the engine and in a high speed region of the engine the airflow is sufficient but noise is large.

Thus as a conventional device for eliminating this disadvantage there is what is shown in Fig. 2. In Fig. 2 (5) is a permanent magnet composing an inductor for an electromagnetic coupling and formed so that adjacent magnetic poles on a perimeter of a circle are different in polarity from each other, the magnet being fixed to said cooling fan (5). (8) is a magnetic plate composing an induced member for the electromagnetic coupling which opposes to said permanent magnet (51) through a minute gap in a diametric direction and is fixed to said pulley (3).

The cooling fan (5) in this conventional example is caused to be freely rotated independently of the rotary shaft (21) and arranged to render a rotational speed thereof constant when a torque of the electromagnetic coupling composed of the permanent magnet (51) forming a rotary magnetic field with the magnetic plate (8) fixed to the rotor shaft (21) accords with a torque due to a wind pressure of the cooling fan. This conventional example, however, results in an improvement in noise of the cooling fan (5) in the high speed region but the airflow from the cooling fan (5) in the low speed range does not increase as compared with the conventional example of Fig. 1. Thus it does not contribute to a reduction in temperature.

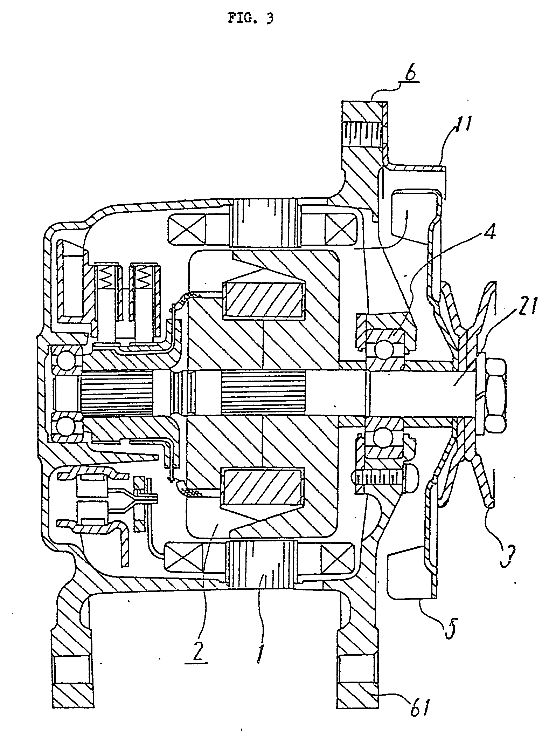

Also a conventional electric generator for a vehicle using a cooling fan large in outside diameter in order to increase a cooling airflow which fan is covered by a safety cover will be described in conjunction with Figs. 3.

In Fig. 3 (1) is a stator having a three-phase armature winding wound thereon, (2) a rotor having a field winding wound thereon, and (4) is a bearing. (61) and (62) are brackets on the driving and anti-driving sides for fixing said stator (1) while rotatably journalling said rotor (2). (5) is a cooling fan fixed to said rotary shaft (21), (3) a driven pulley fixed to said rotary shaft (21) along with this cooling fan (5), and (11) is a protective cover fixed to said bracket (6). Now, the rotor (2) is driven by a not shown engine for a vehicle or the like through the pulley (3) to generate a three-phase AC electric power on an armature coil of the stator (1). A cooling airflow is produced, as shown at the arrow, by means of the cooling fan (5) for absorbing generated heat due to a thermal loss, and the electric generator is cooled. As understood from the Figure, it is contrived that the outside diameter of the cooling fan (5) is taken to be larger than that of the stator (1) to render the electric generator relatively small, but as described above, the protective cover (1) has been mounted to the cooling fan (5) as the case may be. This is because the cooling fan (5) externally mounted may impart an injury or injuries to a person or persons performing the adjusting operation and others during the rotation thereof.

Accordingly, this conventional generator has required the protective cover (11) for purposes of safety and had the disadvantages that the number of the components is large and the number of the assembling steps increases while the device is large-scaled.

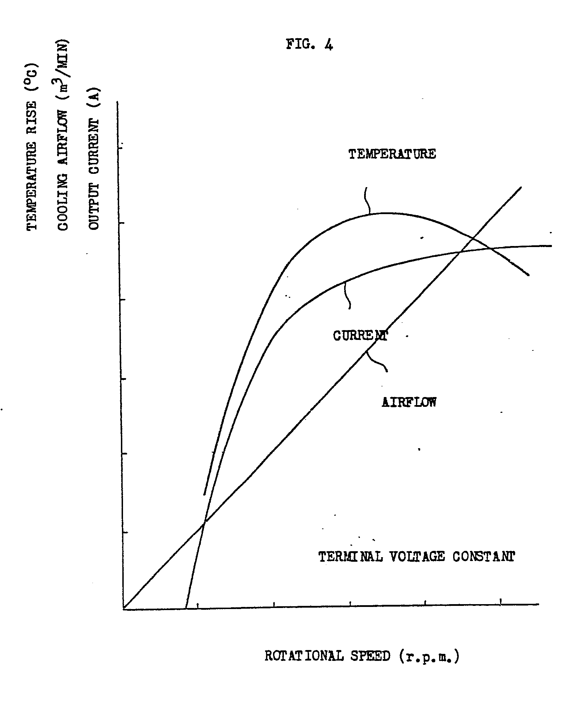

Also Fig. 4 shows the relations of an output current from said conventional electric generator, the airflow from the cooling fan (5) and a temperature rise of the armature winding. The electric generator for the vehicle has the characteristic that the temperature rise becomes maximum at about 3000 RPM, but if the airflow is increased then this temperature can be reduced. In the conventional devices, however, the airflow due to the cooling fan (5) is not sufficient when the temperature rise of the electric generator for the vehicle becomes maximum as shown in Fig. 4 and the magnitude of the output from the electric generator has a limitation.

It is known to drive a cooling fan of an electrical machine, by power tapped from a main winding of the machine through an intermediate electrical circuit. Japanese Patent Publication No. 50-155915 discloses an electrical machine in which the main winding has an intermediate tap which energises an auxiliary motor driving a cooling fan. The auxiliary motor is driven at a constant speed in accordance with the voltage supplied.

German Patent Specification 573878 discloses an electric motor with a fan driven by a squirrel cage motor connected in parallel with the main motor.

German Patent Specification 1134453 discloses a DC generator/motor having a fan electromagnetically driven from the main rotor of the machine. This arrangement is unsuitable for use in a vehicle due to the complexity of the design and expense of the machine.

The present invention aims to provide an electric generator for a vehicle in which the airflow due to a cooling fan is materially increased and a larger output is obtained with the same generator size.

The invention resides in an electric generator for a vehicle, comprising a drive shaft, a generator rotor having a field winding, a generator stator with an AC winding, and a cooling fan coaxial with the generator rotor and rotatable independently of the shaft and generator rotor, an induced member comprising a metallic plate rotatably mounted on the shaft the induced member being united directly with the fan and coaxial with and adjacent to the inductor energising and magnetically coupled to it so as to be driven in rotation on energisation of the inductor energising winding, and electromagnetic driving means for the fan through which driving energy is transmitted from the generator to the fan, a bracket surrounding the generator rotor, characterised in that the drive shaft is journalled in this bracket, the inductor is fixed to the bracket and has an energising winding with a plurality of poles, and the energising winding is electrically connected to the generator stator winding so as to be energised by a portion of the AC output from the generator, and the inductor winding has a number of poles smaller than one half the number of poles of the generator rotor field winding whereby the fan is driven at a speed greater than that of the generator.

In a generator according to the present invention, increased fan speed is achieved particularly at low engine speeds. Relatively small fans can therefore be used to provide sufficient air flow. In particular, the cooling fan can be disposed within the external profile of the generator itself, with a relatively small fan diameter, eliminating the need for a special protective fan cover and substantially reducing the overall size of the generator.

Brief description of the drawings

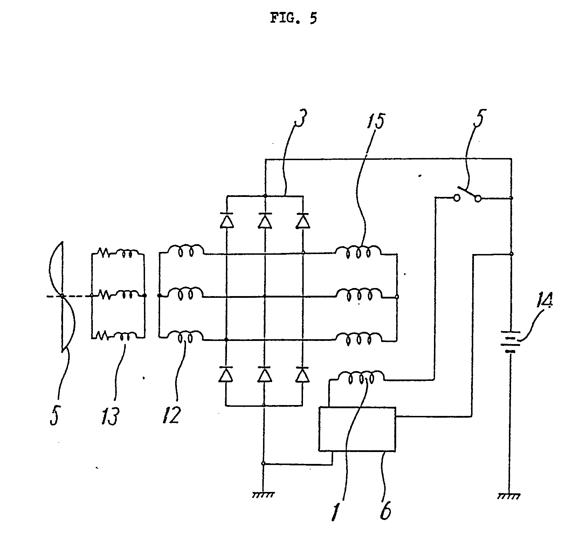

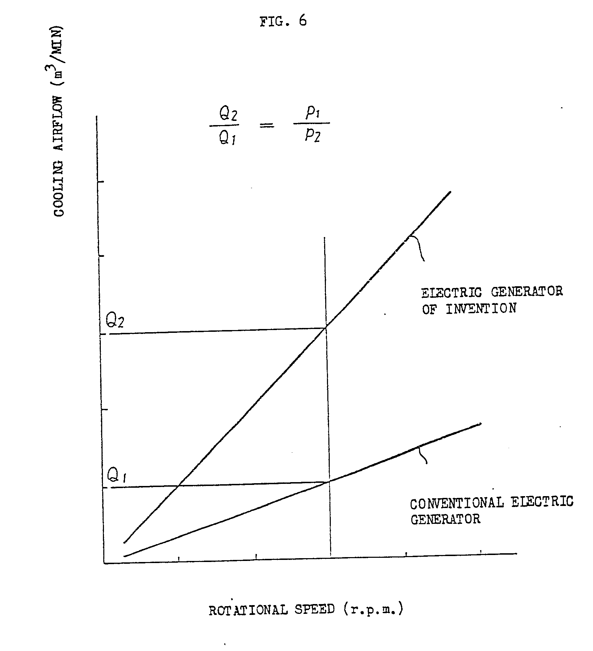

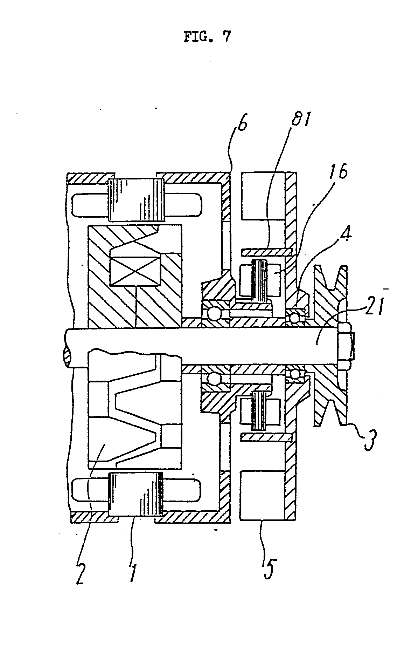

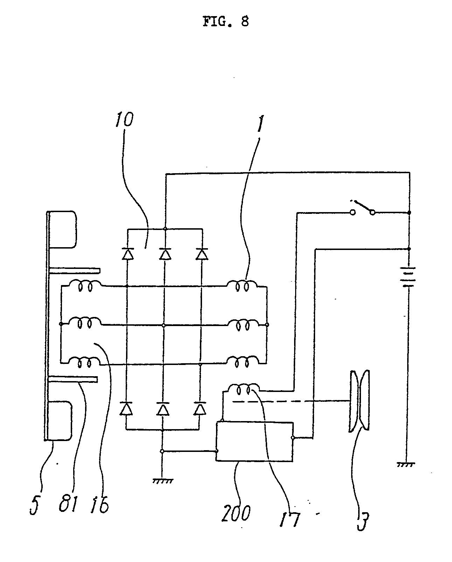

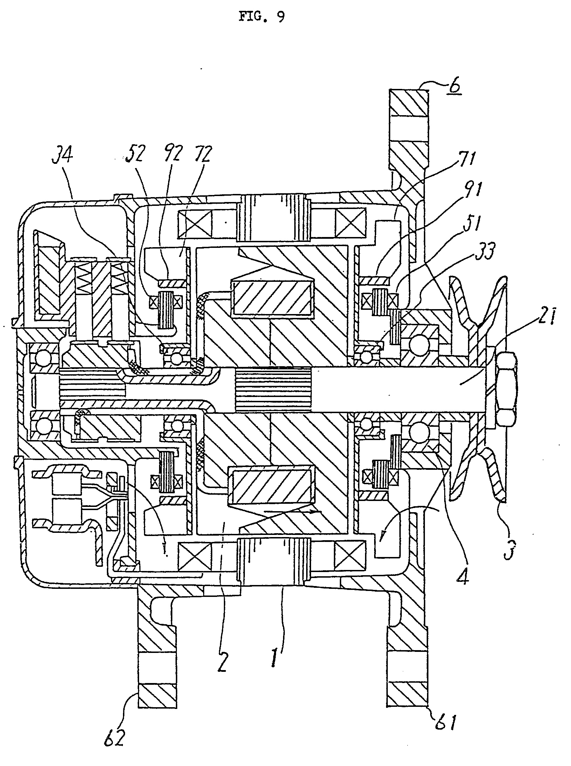

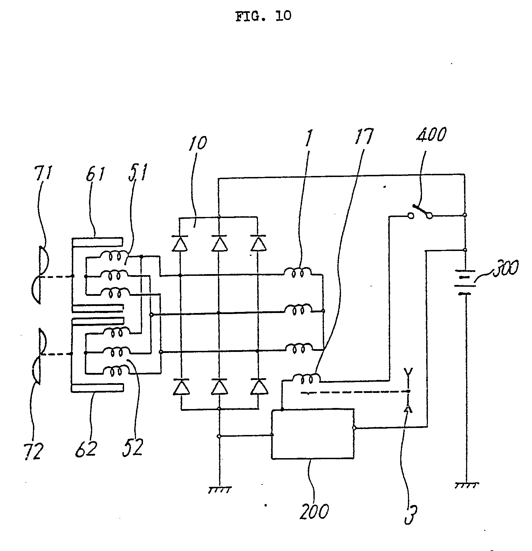

Figure 1 is a sectional view illustrating a conventional electric generator for a vehicle; Figure 2 is a sectional view illustrating another conventional example; Fig. 3 is a sectional view illustrating still another conventional example; Fig. 4 is a characteristic curves illustrating relations of the output from a conventional electric generator for a vehicle, cooling airflow and temperature rise; Fig. 5 is a diagram of a configuration of an electric circuit illustrating one embodiment of the present invention; Fig. 6 is characteristic curves illustrating increases in airflow from the cooling fan in the embodiment of the present invention shown in Fig. 5 and a conventional device; Fig. 7 is a sectional view illustrating another embodiment of the present invention; Fig. 8 is an electrical connection diagram illustrating the embodiment shown in Fig. 7; Fig. 9 is a sectional view illustrating still another embodiment of the present invention; and Fig. 10 is an electrical connection diagram illustrating the embodiment shown in Fig. 9.

The description will be made in conjunction with one embodiment of the present invention shown in Fig. 5 and Fig. 6. In each Figure (12) is a stator winding of an induction motor which is fed with a current by an output from said electric generator. (13) is a rotor of the induction motor which is made of aluminum so as to form an eddy current coupling, and (5) is a cooling fan fixed on the same rotary shaft as this rotor (13).

The operation of this embodiment will now be described.

When an engine is started and the AC generator for the vehicle is driven, an output voltage is induced on the armature winding (15) in accordance with the rate of rotation and a rectified output voltage thereof is supplied to a battery (14) or a load (not shown). Also at the same time, the output voltage induced on said armature winding (15) is supplied to the stator winding (12) of the induction motor to energize a magnetic coupling portion thereof. Due to the conduction of the current through this stator winding (12), an eddy current is generated on eddy current coupling portions of the stator and rotor (13) of the induction motor and the rotor (13) is rotation-driven by means of an electromagnetic force attending the generation of the eddy current.

The relationship between rate of rotation of the rotor (13) of this induction motor and the rotor of the electric generator for the vehicle will be described hereinafter.

That is, assuming now that $P_1$ designates the number of poles of the electric generator, the relationship between a synchronous speed $N_1$ rpm and a frequency $f_1$ Hg is given by

$$N_1 = \frac{120 f_1}{P_1} \ (rpm).$$

Assuming that $P_2$ designates the number of poles of the stator winding (12) of the motor, the relationship between a synchronous speed $N_2$ rpm and the frequency $f_1$ is given by

$$N_2 = \frac{120 f_1}{P_2}$$

and accordingly a ratio of the synchronous speed $N_2$ of the elctric motor to the synchronous speed $N_1$ of the electric generator holds

$$N_2 : N_1 = P_1 : P_2.$$

With a slip disregarded, the rotor (13) of the electric motor is increased in speed by about $P_1/P_2$ times and the airflow from the cooling fan (5) coupled to the rotor (13) is multiplied by $P_1/P_2$. For example, assuming that the electric generator is composed of 12 poles and the electric motor is composed of 4 poles, the rotor (13) of the electric motor is rotated at a speed equal to about three times that of the rotor of the electric generator. Accordingly a tripled cooling airflow can be provided. Fig. 6 shows the relationship between the airflow in a conventional electric generator for a vehicle and the airflow in the electric generator of the present invention for a vehicle.

Still more in the foregoing the electric motor energised with the current output from the electric generator to drive the cooling fan (5) has been exemplified as utilizing the eddy current coupling, but the coupling portion of the rotor (13) may be formed of a magnetic member to form a hysteresis coupling.

In the present invention as described above, by setting the number of poles of the electric generator and that of the electric motor at will, the rate of rotation of the cooling fan is greater than that of the electric generator and the airflow from the cooling fan can be rendered large. Therefore there is the advantage that the electric generator can be identical in size to conventional ones, but provides an output large as compared with the conventional ones.

Another embodiment of the present invention shown in Fig. 7 and Fig. 8 will be described. In these Figures, (200) is a voltage regulator for controlling the conduction of a current through the field coil of the rotor to hold an output voltage from the armature coil constant, and (16) is a stator which is an inductor composing an electromagnetic coupling, has a three-phase winding supplied from said armature winding and is fixed to an outer lateral peripheral portion of said bracket (6). (81) is an aluminum plate serving as an induced member for the electromagnetic coupling which plate is fixed to said cooling fan so as to oppose to said stator through a minute gap in a diametric direction.

That is to say, in the embodiment constructed as described above, when the pulley (3) is driven by an engine not shown and the rotor (2) is rotated, a three-phase alternating current is generated on the armature winding of the stator (1). The synchronous speed $N_1$ accords with the rotational speed of the rotor (12) and, assuming that $P_1$ designates the number of poles, the synchronous frequency f is given by the following expression:

$$f = \frac{P_1 \times N_1}{120} \ (Hz).$$

Since the winding of the stators (1) and (16) are electrically put in three-phase connections, the synchronous frequency results in

$$f = \frac{P_2 \times N_2}{120} \ (Hz)$$

on the assumption that $P_2$ designates the number of poles of the stator (16) of the inductor. The relationships between the numbers of poles of the stators (1) and (6) and the synchronous speed results in

$$\frac{P_1}{P_2} = \frac{N_2}{N_1}.$$

That is to say, when the number of poles of the stator (1) and that of the stator (16) of the inductor fixed to the bracket (6) are selected to be 12 and 4 poles, the magnetic field of the stator (16) is rotated at the tripled synchronous speed with respect to the rotational speed of the rotor (12). The induced member (8) interacts magnetically with the second stator (16), and generates a torque according to the laws of the electromagnetism so as to be rotated. Since the torque due to wind pressure of the cooling fan (5) fixed to the induced member (81) is small in the low speed region there is some slip but the rotation is effected at approximately the same speed as the synchronous speed of the stator (16).

Namely, the cooling fan (5) is rotated at about three times the rotational speed of the rotor (2) and accordingly about three times the airflow is provided as compared with the conventional electric generator. If the rotational speed of the rotor (2) rises and hence the rotational speed of the cooling fan (5) rises, the wind pressure received by the cooling fan (5) is increased and the torque thereof accords with a torque of the induced member (81). At that time the rotational speed of the cooling fan (5) becomes constant. Accordingly even though the rotation of the rotor (2) reaches a high speed, noise of the cooling fan (5) becomes constant.

Instead of an eddy current coupling, the induced member may comprise a magnetic member to form a hysteresis coupling.

When the cooling fan according to the present invention is utilized as described above, it becomes possible to sharply increase the airflow in the low speed region and therefore it is possible to additionally absorb heat generated due to a loss by a corresponding amount. For example twice the output from a conventional electric generator can be taken out. Furthermore there is exhibited the excellent effect that noise due to the rotation of the cooling fan at high speeds can be kept down to a constant level.

The inductor of the electromagnetic couplings previously proposed has been required to form a magnetic field to maintain the rotation of 1 to 1 and use a considerably large magnet in order to provide the required torque. In contrast, the inductor according to the present invention uses one portion of the AC output from the electric generator for the vehicle and therefore there is the effect that, by selecting the number of poles, a rate of rotation multiplied by any integer can be freely obtained.

Still another embodiment of the present invention is shown in Fig. 9 and Fig. 10.

In the Figures (51) and (52) are a first and a second winding fixed to brackets (61) and (62) respectively, having three-phase windings and composing inductors, which windings are energised with currents by means of the AC output from said electic generator. (91) and (92) are respectively a first and a second induced member which oppose said inductors through minute gaps in the diametric direction and are formed of aluminum so as to form eddy current couplings with said inductors. (71) and (72) are first and second cooling fans intergrally fixed to said first and second induced members (91) and (92), and (33) and (34) are bearings for rotatably journalling said induced members (91) and (92) to the rotary shaft (21). (10) is a rectifier for rectifying the AC output from the armature coil of said stator (1), (200) a voltage regulator for controlling the conduction of current to a field coil (17) of said rotor (2) to hold the output voltage from said armature coil constant, (300) a battery and (400) is a key switch. When the rotor (2) is driven through the pulley (3), a three-phase alternating current is generated on the stator (1) and the first and second three-phase windings (51) and (52) electrically connected to this are supplied with a three-phase electric power to generate a rotary magnetic field. The eddy current couplings formed between the inductors and the induced members (91) and (92) rotate the induced members (91) and (92) by means of an electromagnetic force. Hereby, for example, selecting the number of poles of the armature winding of the electric generator to be 12 poles and selecting the first and second windings (51) and (52) of the inductors to be of 4 poles, the synchronous speed of a rotary magnetic field of the latter becomes three times the synchronous speed of the former. Accordingly, the first and second induced members (91) and (92) are driven at three times the synchronous speed of the rotor (1) of the electric generator and similarly rotated at a tripled speed if the slip is disregarded. The cooling fans (71) and (72) coupled thereto can deliver an airflow multiplied by about three as compared with the cooling fan of conventional electric generators. Accordingly even though the cooling fans are disposed within the brackets (61) and (62) and have small outside diameters, they can provide an airflow larger than those from cooling fans of large diameter disposed on the outside of the brackets (61) and (62), with the excellent effect that the protective cover (11) previously required is not necessary and the space around the engine of the vehicle can be effectively utilized.

The output from the electric generator is generally proportional to the magnitude of the magnetomotive force of the rotor (2) but a resistance of the field coil for generating this magnetomotive force becomes large due to the generation of heat to decrease the field current and accordingly the magnetomotive force is attenuated. In order to render this attenuation small, it is necessary to cause a cooling airflow to be applied to the surface of the rotor (2). For example, if the number of poles of the first winding (51) in the inducer is selected to be small as compared with that of the second winding (52) then the first cooling fan (71) is rotated at a speed higher than that of the second cooling fan (72) so that a difference in wind pressure between both sides of the rotor (2) becomes large as compared with conventional electric generators. Accordingly, the cooling airflow passing along the outer peripheral surface of the rotor (2) increases. Thus the attenuation of the magnetomotive force can be small.

Instead of an eddy current coupling the induced members (61) and (62) may be formed of a magnetic member to form a hysteresis coupling.

Also in the foregoing description there has been exemplified the construction by which the two cooling fans (71) and (72) are independently rotated, but it is needless to say that, even though either one of the cooling fan would be fixed to the rotary fan (21), a considerable effect is obtained.

**Claims**

1. An electric generator for a vehicle, comprising a drive shaft (21), a generator rotor (2) having a field winding, a generator stator (1) with an AC winding, and a cooling fan (5) coaxial with the generator rotor and rotatable independently of the shaft and generator rotor, an induced member (81, 91, 92) comprising a metallic plate rotatably mounted on the shaft (21), the induced member being united directly with the fan (5) and coaxial with and adjacent to the inductor energising (12, 16, 51, 52) and magnetically coupled to it so as to be driven in rotation on energisation of the inductor energising winding, and electromagnetic driving means for the fan through which driving energy is transmitted from the generator to the fan, a bracket (6, 61, 62) surrounding the generator rotor, characterised in that the drive shaft (21) is journalled in said bracket, the inductor (16, 51, 52) is fixed to the bracket and has an energising winding (12) with a plurality of poles, and the energising winding (12) is electrically connected to the generator stator winding (1) so as to be energised by a portion of the AC output from the generator, and the inductor winding has a number of poles smaller than one half the number of poles of the generator rotor field winding whereby the fan is driven at a speed greater than that of the generator.

2. A generator for a vehicle as claimed in claim 1 characterised in that the induced member is composed of a magnetic material.

3. A generator for a vehicle as claimed in claim 1 or 2, characterised in that the rotor of the generator has twelve poles, and the stator of the fan motor has four poles.

4. A generator for a vehicle as claimed in any preceding claim characterised in that the induced member (81, 91, 92) projects axially and encircles the inductor (16, 51, 52).

5. A generator for a vehicle as claimed in any preceding claim characterised in that the inductor (16, 51, 52) is fixed to an inner peripheral portion of the said bracket.

6. A generator for a vehicle as claimed in claim 5 characterised in that the fan and the induced member are disposed within the said bracket.

7. A generator for a vehicle as claimed in any preceding claim, characterised in that the fan and the induced member are mounted rotatably on the generator shaft through a bearing (4, 33, 34).

8. A generator for a vehicle as claimed in any of the preceding claims, characterised in that a plurality of the said inductors are provided, together with a plurality of induced members corresponding to the said inductors.

**Patentansprüche**

1. Fahrzeuggenerator, enthaltend eine Antriebswelle (21), einen Generatorläufer (2) mit einer Feldwicklung, einen Generatorständer (1) mit einer Wechselstromwicklung, einen Ventilator (5) koaxial zum Generatorläufer, der sich unabhängig von der Welle und dem Generatorläufer dreht, ein Induktionselement (81, 91, 92), das eine drehbare auf der Welle (21) montierte Metallplatte aufweist, wobei das Induktionselement direkt mit dem Ventilator (5) verbunden und koaxial mit und in der Nähe der Induktorerregung (12, 16, 51, 52) und magnetisch mit ihr gekoppelt vorgesehen ist, so daß es bei Erregung der Induktorerregerwicklung in einer Fehbewegung angetrieben wird, und eine elektromagnetische Antriebseinrichtung für den Ventilator, über die Antriebsenergie von dem Generator zum Ventilator übertragen wird, wobei ein Lagerschild oder eine Halterung (6, 61, 62) den Generatorläufer umgibt, dadurch gekennzeichnet, daß die Antriebswelle (21) in der Halterung angelenkt ist, daß der Induktor (16, 51, 52) an der Halterung befestigt ist und eine Erregerwicklung (12) mit einer Vielzahl von Polen aufweist, daß die Erregerwicklung (12) elektrisch mit der Generatorständerwicklung (1) verbunden ist, so daß sie von einem Teil des Gleichstromausgangssignals vom Generator erregt wird, und daß die Induktorwicklung eine Anzahl von Polen aufweist, die kleiner ist als die Hälfte der Anzahl von Polen der Generatorläuferfeldwicklung, so daß der Ventilator mit einer größeren Geschwindigkeit als der Generator angetrieben wird.

2. Fahrzeuggenerator nach Anspruch 1, dadurch gekennzeichnet, daß das Induktionselement aus einem magnetischen material besteht.

3. Fahrzeuggenerator nach Anspruch 1 oder 2, dadurch gekennzeichnet, daß der Läufer des Generators zwölf Pole aufweist und der Ständer des Ventilatormotors vier Pole besitzt.

4. Fahrzeuggenerator nach einem der vorhergehenden Ansprüche, dadurch gekennzeichnet, daß das Induktionselement (81, 91, 92) axial vorsteht und den Induktor (16, 51, 52) umgibt.

5. Fahrzeuggenerator nach einem der vorhergehenden Ansprüche, dadurch gekennzeichnet, daß der Induktor (16, 51, 52) am Innenumfangsbereich der Halterung befestigt ist.

6. Fahrzeuggenerator nach Anspruch 5, dadurch gekennzeichnet, daß der Ventilator und das Induktionselement innerhalb der Halterung angeordnet sind.

7. Fahrzeuggenerator nach einem der vorhergehenden Ansprüche, dadurch gekennzeichnet, daß der Ventilator und das Induktionselement über ein Lager (4, 33, 34) drehbar auf der Generatorwelle montiert sind.

8. Fahrzeuggenerator nach einem der vorhergehenden Ansprüche, dadurch gekennzeichnet, daß eine Vielzahl von Induktoren zusammen mit einer Vielzahl von Induktionselementen, die den Induktoren entsprechen, vorgesehen sind.

**Revendications**

1. Générateur électrique pour un véhicule comprenant un arbre d'entraînement (21), un rotor (2) de générateur et un enroulement de champ, un stator (1) de générateur avec un enroulement en courant alternatif, et un ventilateur de refroidissement (5) coaxial avec le rotor du générateur et rotatif indépendamment de l'arbre et du rotor du générateur, un organe induit (81, 91, 92) comprenant une plaque métallique montée rotative sur l'arbre (21), l'organe induit étant directement réuni au ventilateur (5) et coaxial avec et adjacent à l'enroulement excitant l'inductance (12, 16, 51, 52) et lui étant magnétiquement couplé de manière à être entraîné en rotation à l'excitation de l'enroulement excitant l'inductance, et un moyen électromagnétique d'entraînement du ventilateur par lequel l'énergie d'entraînement est transmise du générateur au ventilateur, une patte (6, 61, 62) entourant le rotor du générateur, caractérisé en ce que l'arbre d'entraînement (21) est tourillonné dans ladite patte, l'inductance (16, 51, 52) est fixée à la patte et a un enroulement d'excitation (12) avec un certain nombre de pôles et l'enroulement d'excitation (12) est électriquement connecté à l'enroulement (1) du stator du générateur afin d'être excité par une partie de la sortie alternative du générateur, et l'enroulement d'inductance a un nombre de pôles plus petit que la moitié du nombre de pôles de l'enroulement de champ du rotor du générateur, ainsi le ventilateur est entraîné à une vitesse plus importante que celle du générateur.

2. Générateur pour un véhicule selon la revendication 1, caractérisé en ce que l'organe induit se compose d'un matériau magnétique.

3. Générateur pour un véhicule selon la revendication 1 ou la revendication 2, caractérisé en ce que le rotor du générateur a 12 pôles et le stator du moteur du ventilateur a 4 pôles.

4. Générateur pour un véhicule selon l'une quelconque des revendications précédentes, caractérisé en ce que l'organe induit (80, 91, 92) fait saillie axialement et entoure l'inductance (16, 51, 52).

5. Générateur pour un véhicule selon l'une quelconque des revendications précédentes, caractérisé en ce que l'inductance (16, 51, 52) est fixée à une partie périphérique interne de ladite patte.

6. Générateur pour un véhicule selon la revendication 5, caractérisé en ce que le ventilateur et l'organe induit sont disposés dans ladite patte.

7. Générateur pour un véhicule selon l'une quelconque des revendications précédentes, caractérisé en ce que le ventilateur et l'organe induit sont montés rotatifs sur l'arbre du générateur par un palier (4, 33, 34).

8. Générateur pour un véhicule selon l'une quelconque des revendications précédentes, caractérisé en ce qu'un certain nombre des inductances est prévu, avec un certain nombre d'organes induits correspondant auxdites inductances.

0 086 844

FIG. 1

FIG. 2

2

FIG. 3

FIG. 4

TEMPERATURE RISE (°C)
COOLING AIRFLOW (m³/MIN)
OUTPUT CURRENT (A)

TEMPERATURE

CURRENT

AIRFLOW

TERMINAL VOLTAGE CONSTANT

ROTATIONAL SPEED (r.p.m.)

4

FIG. 5

FIG. 6

COOLING AIRFLOW (m³/MIN)

$$\frac{Q_2}{Q_1} = \frac{P_1}{P_2}$$

ELECTRIC GENERATOR
OF INVENTION

$Q_2$

$Q_1$

CONVENTIONAL ELECTRIC
GENERATOR

ROTATIONAL SPEED (r.p.m.)

FIG. 7

FIG. 8

FIG. 9

FIG. 10